# EUROPEAN PATENT APPLICATION

(11) **EP 4 818 489 A1**
(43) Date of publication of application: **07.10.2026**
(21) Application number: 26161531.4
(22) Date of filing: 02.03.2026
(51) Int. Cl.: F02C 3/22

(54) **HYDROGEN LEAK DETECTION**

(30) Priority: 28.03.2025 GB 202504625
(71) Applicant: Rolls-Royce plc, London N1 9FX (GB)
(72) Inventor: Chittim, Sophie, Derby, DE24 8BJ (GB); Coulson, James T J, Derby, DE24 8BJ (GB)
(74) Representative: Rolls-Royce plc

(57) **Abstract**

A method of operating a hydraulic system of a hydrogen-fuelled engine, comprising: flowing a hydraulic liquid through a first flow path within a hydraulic liquid conduit (232), the hydraulic liquid comprising an unsaturated hydrocarbon; flowing the hydrogen fuel through a second flow path within a hydrogen fuel conduit (206) in contact with the hydraulic liquid conduit (232) towards the hydrogen-fuelled engine; measuring a physical property relating to a degree of hydrogenation of the hydraulic liquid; and determining a hydrogen leak from the first flow path to the second flow path from a change in the measured physical property.

## Description

### TECHNICAL FIELD

This disclosure relates to methods and systems for detection of hydrogen leaks in a hydraulic system for a hydrogen fuelled engine.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures, as either a compressed gas, a supercritical fluid, or a liquid.

Challenges of operating such gas turbine engines include managing temperatures of the cryogenically cooled hydrogen and other engine fluids, as well as controlling actuators within the engine. Conventional gas turbine engines use fuel for various actuation and control purposes. Since neither cryogenic liquid hydrogen, nor gaseous hydrogen are suitable for such purposes, in view of its low temperature as a liquid and its compressibility as a gas, a different system must be designed for hydrogen fuelled gas turbine engines.

A particular challenge when using hydrogen as a fuel is in preventing and detecting fuel leaks. Seals in a hydrogen fuel system need to be highly impervious and certain materials can be degraded by hydrogen. Close attention therefore needs to be paid to preventing and detecting leaks, particular for safety critical applications such as in aircraft.

### SUMMARY

In a first aspect there is provided a method of operating a hydraulic system of a hydrogen-fuelled engine, comprising:
flowing a hydraulic liquid through a first flow path within a hydraulic liquid conduit, the hydraulic liquid comprising an unsaturated hydrocarbon;
flowing the hydrogen fuel through a second flow path within a hydrogen fuel conduit in contact with the hydraulic liquid conduit towards the hydrogen-fuelled engine;
measuring a physical property relating to a degree of hydrogenation of the hydraulic liquid; and
determining a hydrogen leak from the first flow path to the second flow path from a change in the measured physical property.

The physical property may be viscosity. The step of determining the hydrogen leak may comprise comparing the viscosity of the hydraulic liquid to a threshold viscosity. The method may comprise determining a hydrogen leak if the viscosity of the hydraulic liquid is above the threshold viscosity.

The physical property may be electrical conductivity. The step of determining the hydrogen leak may comprise comparing the electrical conductivity of the hydraulic liquid to a threshold conductivity. The method may comprise determining a hydrogen leak if the electrical conductivity of the hydraulic liquid is below the threshold conductivity.

The physical property may be a dielectric constant of the hydraulic liquid.

The hydraulic liquid conduit and the hydrogen fuel conduit may pass through a heat exchanger configured to transfer heat from the hydraulic liquid to the hydrogen fuel.

The unsaturated hydrocarbon may be an alkene or alkylbenzene having 10 or more carbon atoms.

The engine may be a gas turbine engine.

According to a second aspect of the invention there is provided a hydraulic system for a hydrogen fuelled engine, the hydraulic system comprising:
a hydraulic liquid conduit forming a first flow path for a hydraulic liquid;
a hydrogen fuel conduit in contact with the hydraulic liquid conduit, the hydraulic liquid conduit comprising a sensor configured to measure a physical property relating to a degree of hydrogenation of the hydraulic liquid; and
a controller connected to the sensor and configured to determine a hydrogen leak from the first flow path to the second flow path from a change in the measured physical property.

The physical property may be viscosity. The controller may be configured to determine the hydrogen leak by comparing the viscosity of the hydraulic liquid to a threshold viscosity. The controller may be configured to determine a hydrogen leak if the viscosity of the hydraulic liquid is above the threshold viscosity.

The physical property may be electrical conductivity. The controller may be configured to determine the hydrogen leak by comparing the electrical conductivity of the hydraulic liquid to a threshold conductivity. The controller may be configured to determine a hydrogen leak if the electrical conductivity of the hydraulic liquid is below the threshold conductivity.

The physical property may be a dielectric constant of the hydraulic liquid.

The hydraulic system may further comprise a heat exchanger configured to transfer heat from the hydraulic liquid to the hydrogen fuel, wherein the hydraulic liquid conduit and the hydrogen fuel conduit pass through the heat exchanger.

The engine may be a gas turbine engine.

The hydraulic liquid conduit may form a closed loop for recirculation of the hydraulic liquid through the hydraulic system.

The hydraulic system may comprise a hydraulic pump upstream from the heat exchanger.

### BRIEF DESCRIPTION OF THE DRAWINGS

An embodiment will now be described by way of example only with reference to the accompanying drawings, which are purely schematic and not to scale, and in which:
Figure 1 is a schematic plan drawing of a hydrogen-fuelled aircraft with a propulsion system comprising hydrogen-fuelled turbofan engines;
Figure 2 is a schematic block diagram of a fuel system for the propulsion system of the aircraft of Figure 1;
Figure 3 is a schematic diagram of an example hydraulic liquid system for a gas turbine engine;
Figure 4 is a flow diagram illustrating an example method of operating a hydraulic system; and
Figure 5 is a schematic diagram of a sensor mounted to a hydraulic liquid conduit and connected to a controller.

### DETAILED DESCRIPTION

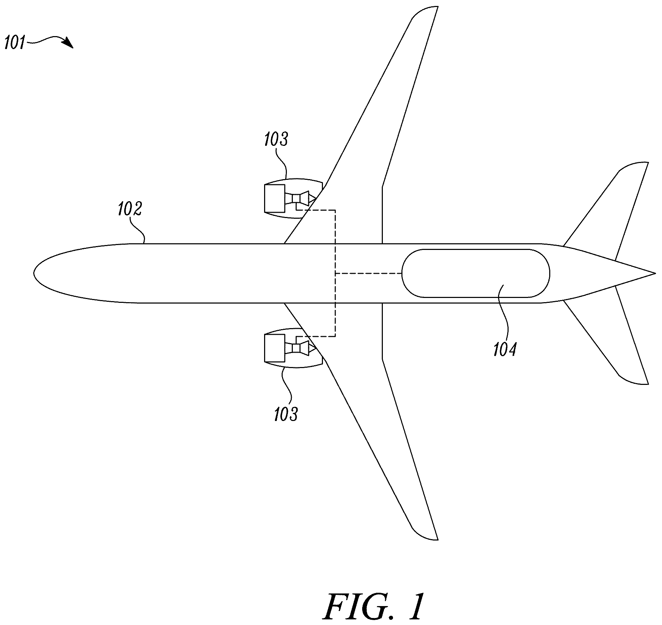

A hydrogen-fuelled aircraft is illustrated in Figure 1. In this example, the aircraft 101 is of substantially conventional tube-and-wing twin engine configuration with a central fuselage 102 and a propulsion system comprising substantially identical underwing-mounted turbofan gas turbine engines 103.

A hydrogen storage tank 104 is located in the fuselage 102. The hydrogen storage tank 104 may be a cryogenic hydrogen storage tank and thus stores the hydrogen fuel in a liquid state, in a specific example at around 22 K. The hydrogen fuel may be pressurised to between around 1 bar to around 4 bar, in a specific example around 4 bar. As will be appreciated, storing hydrogen fuel at a higher pressure would necessitate heavier tanks to contain the pressure, and increase the risk of leaks. On the other hand, a lower pressure would reduce the boiling point of the hydrogen, requiring a lower temperature in the tank, and would risk cavitation and or two-phase flow in downstream hydrogen plumbing.

In alternative embodiments, the hydrogen may be stored as a compressed or supercritical fluid at high pressures and low temperatures. For example, the hydrogen may be stored at between 22 and 200 K, and at pressures between around 100 and 300 bar.

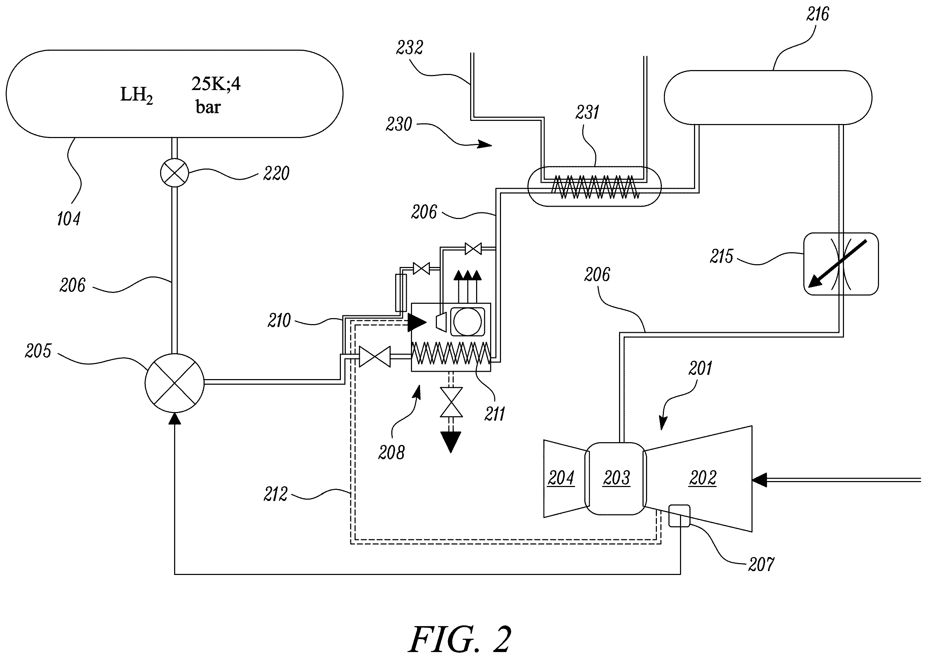

A block diagram of one of the propulsion systems comprising one of the engines 103 and its associated fuel system is shown in Figure 2, in which the turbofan engine 103 comprises a core gas turbine 201.

The core gas turbine 201 comprises, in fluid flow series, at least one compressor 202 (optionally including separate low-pressure and high-pressure compressors), a core combustor 203 and a turbine system 204 (which may comprise separate low-pressure and high-pressure turbines). The compressor 202 is driven by the turbine 204 via a shaft (not shown), or by separate shafts where multiple compressors and turbines are provided. A fan (not shown) is typically provided to provide propulsive thrust in addition to that generated by the engine core. It will be appreciated that in alternative embodiments, the core gas turbine 201 could be of three-shaft configuration, and / or could comprise a reduction gearbox between the turbine and fan.

In operation, hydrogen fuel is pumped from the hydrogen storage tank 104 by a pump 205 through a main fuel conduit 206 which ultimately delivers fuel to the core combustor 203. The pump 205 may be driven by an electric machine that is provided with electrical power from a main engine driven electrical generator 207. The generator 207 may be a starter-generator configured to provide both electrical generation and engine starting, but other configurations are envisaged. The pump 205 may alternatively be driven by one or more of the gas turbine engine core shafts via an auxiliary gearbox (not shown). In some cases, a low-pressure pump 220 may also be provided upstream of the high-pressure pump 205. The low-pressure pump 220 may be provided within the liquid hydrogen tank 104.

Where the tank 104 stores liquid hydrogen, the pump 205 is typically configured to pump liquid hydrogen, rather than primarily to pump gaseous or supercritical hydrogen. Where the tank 104 is configured to store gaseous hydrogen, the pump 205 is configured to pump gaseous hydrogen, or may be omitted entirely if the pressure of hydrogen in the tank is sufficiently high.

As will be appreciated, it is desirable to increase the temperature of the fuel from cryogenic storage at around 22 K to a temperature much closer to the firing temperature of the core gas turbine 201, subject to the constraint of not exceeding the autoignition temperature of the hydrogen fuel prior to admission into the combustor 203. The injection temperature may be from around 250 to 300 K, for example around 250 K. In some cases, it may be desirable to increase the fuel temperature to above an icing temperature, such as 273 K.

A pre-heater 208 may be provided for heating of the hydrogen fuel, or to implement a phase change if the fuel is provided in liquid or mixed liquid and gaseous form. This takes place between the pump 205 and the core combustor 203. The heater 208 may be configured to raise the temperature of the hydrogen fuel to the required injection temperature.

The heater 208 comprises an offtake 210 configured to divert a portion of the hydrogen fuel from the main fuel conduit 206. A bleed offtake 212 is provided, which provides high-pressure bleed air to the heater. Hydrogen fuel and bleed air are combusted within the heater 208 to heat hydrogen in the fuel conduit 206 via a pre-heater heat exchanger 211.

Fuel flow through the system between the tank 104 and core combustor 203 is controlled by one or more valves including a Fuel Management Unit (FMU) 215, which actively controls fuel flow rate and pressure delivered to the core combustor 203 in conjunction with operation of the pumps 205, 220. An optional buffer tank 216 may be provided, which is configured to store hydrogen gas downstream of the pre-heater 208 to manage transient pressures and flow rates.

A hydraulic system 230 comprising a heat exchanger 231 is provided to exchange heat between the relatively cold hydrogen fuel and a relatively warm hydraulic liquid within a hydraulic liquid loop conduit 232 passing through the heat exchanger 231 alongside the main fuel conduit 206. The heat exchanger 231 is provided downstream in hydrogen fuel flow of the pre-heater 208, and upstream of at least the combustor 203 of the gas turbine engine 201. The heat exchanger 230 is also upstream of the FMU 215 and hydrogen accumulator 216, although it will be appreciated that the heat exchanger 230 may alternatively be located upstream in hydrogen fuel flow of the preheater 208, and the preheater 208 may be omitted entirely in some embodiments.

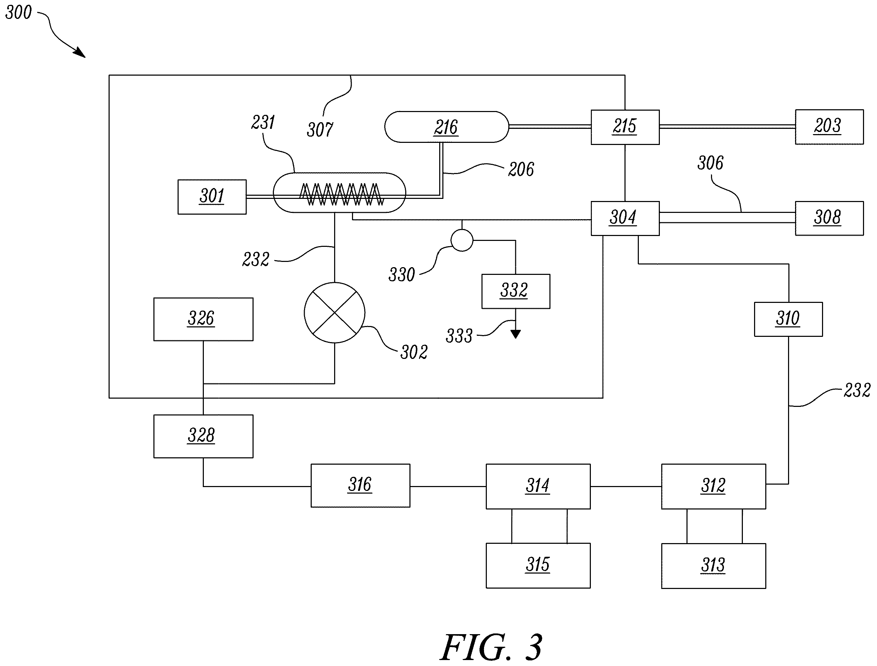

Figure 3 illustrates an example implementation of a hydraulic system 300 for the propulsion system of Figure 2. The hydraulic system 300 comprises a closed-loop hydraulic liquid conduit 232, which contains a hydraulic liquid such as Therminol^{™}, a synthetic heat transfer fluid produced by Eastman Chemical Company. Other suitable hydraulic liquids are known, such as mineral oil derivatives, or any other suitable dielectric incompressible fluid.

The hydraulic system 300 comprises a heat exchanger 231, which operates to transfer heat from hydraulic liquid within the hydraulic liquid conduit 232 to hydrogen fuel within the fuel conduit 206. The fuel conduit 206 carries hydrogen from a fuel source 301 through the heat exchanger 231, buffer tank 216 and FMV 215 before arriving at the combustor 203. The fuel source 301 represent the various components including the fuel tank 104, pumps 220, 205 and pre-heater 208 upstream of the heat exchanger 231.

The hydraulic system 300 comprises a hydraulic pump 302 configured to pressurise and drive hydraulic liquid through the system 300. The pump 302 may be of conventional construction and may for example be configured to provide a pressure of between around 75 to 90 bar (around 1100 to 1300 psi).

Immediately downstream of the hydraulic pump 302 is the heat exchanger 231. As noted above, the heat exchanger is configured to transfer heat from hydraulic liquid in the hydraulic liquid conduit 232 to the hydrogen fuel in the fuel conduit 206. As such, the hydraulic liquid is cooled by the heat exchanger 231 and also experiences some pressure drop.

A first hydraulic accumulator 304 is provided downstream of the heat exchanger 231. This stores hydraulic liquid and provides a reservoir of hydraulic liquid for downstream components. The first hydraulic accumulator 304 is in fluid communication with a first hydraulic system sub-loop 306, which provides high-pressure hydraulic liquid to one or more hydraulically actuated components. In this example, the hydraulically actuated components comprise at least one Variable Stator Vane Actuator (VSVA) 308 configured to vary airflow angle entering one or more compressor stage of the compressor 202. As will be appreciated, other engine or aircraft hydraulic actuators may be provided.

The first sub-loop 306 circulates hydraulic liquid between the accumulator 304 and the VSVAs 308 in a continuous loop, partly separated from the main hydraulic system loop 232. A second sub-loop 307 circulates hydraulic liquid through the FMV 215 and accumulator 304.

Downstream of the high-pressure accumulator 304 in the main loop 232 is a pressure reducing device / flow restrictor 310. The restrictor 310 may be in the form of a fixed or variable flow area orifice, which serves to permit flow downstream, while reducing pressure. The restrictor 310 may for example be implemented as two orifice plates in series. The pressure may be reduced by the restrictor 310 to between 7 and 14 bar (100 - 200 psi). As such, the hydraulic liquid can serve further low-pressure hydraulic systems.

Immediately downstream of the restrictor 310 are first and second heat exchangers 312, 314. The first heat exchanger 312 is connected to an engine oil system 313 and the second heat exchanger 314 is connected to a facility water supply 315. A hydraulic liquid filter 316 may be provided downstream of the heat exchangers 312, 314 or may be provided in an alternative location in the conduit 232.

A low-pressure hydraulic accumulator 326 is provided immediately upstream of the hydraulic pump 302, to regulate pressure and provide a reservoir of hydraulic liquid for the system 300. A system pressure of approximately 3.5 bar (50 psi) may be maintained in the hydraulic accumulator 326 upstream of the hydraulic pump 302. An overpressure relief valve 328 may be provided in the hydraulic liquid conduit 232, in this example between the low-pressure hydraulic accumulator 326 and the hydraulic liquid filter 316.

The heat exchanger 231 represents a potential location for leaks of hydrogen from the fuel conduit 206, given the number of joints and seals required in the heat exchanger 231. A sensor 330 is positioned in the hydraulic liquid conduit 302 downstream of the heat exchanger 231 to measure a physical property of the hydraulic liquid, the physical property relating to a degree of hydrogenation of the hydraulic liquid. If there are no leaks within the fuel conduit causing hydrogen to leak into the hydraulic liquid, the physical property should remain unchanged over time. If, however, a hydrogen leak occurs such that hydrogen passes into the hydraulic liquid, a hydrogenation reaction may occur that causes a physical property of the hydraulic liquid to change. The ability of the hydraulic liquid, or a component of the hydraulic liquid, to undergo hydrogenation is therefore necessary firstly for the ability of the hydraulic liquid to absorb the hydrogen, rather than resulting in a two-phase hydraulic fluid, and secondly for this to be detected through a change in the physical property.

Hydrogenation reactions that may occur as a result of leaks of hydrogen into the hydraulic liquid conduit will depend on the composition of the hydraulic liquid and the conditions within the hydraulic liquid conduit 302, including pressure and temperature, as well as the presence of a catalyst. Typical conditions required for hydrogenation may be temperatures within the region of 100 and 200 °C and pressures of up to around 150 bar and in the presence of a nickel catalyst. Similar conditions may be present within the hydraulic liquid conduit 232, given that stainless steel materials used for the conduit, for example SAE 316L grade, will contain nickel.

The chosen hydraulic liquid, typically a synthetic hydrocarbon, may not itself be capable of undergoing hydrogenation. A hydrocarbon that is capable of undergoing hydrogenation, i.e. a hydrocarbon with one or more unsaturated carbon-carbon bonds, may be blended with the hydraulic liquid to provide a composition that is capable of undergoing hydrogenation. Example hydrocarbons that may be used include alkenes or alkylbenzenes having 10 or more carbon atoms, optionally with side-chains containing aromatics. In a general aspect, the hydraulic liquid may contain a liquid hydrocarbon having one or more unsaturated carbon-carbon bonds capable of undergoing hydrogenation. The liquid hydrocarbon may have a boiling point of over 100 °C, and optionally below around 200 °C or below around 300 °C. An example hydraulic liquid may for example be a blend of Therminol D-12, having a boiling point of around 192 °C, with a liquid hydrocarbon. The liquid hydrocarbon may for example be (5E)-5-Decene, having a single unsaturated C-C bond and with a boiling point of around 171 °C, or a linear alkyl benzene with 10 of more carbon atoms. The hydrocarbon liquid may be a mixture of different compounds with a range of carbon atoms.

Typical hydrogenation reactions may include transformation of carbon-carbon alkene or alkyne bonds into alkane bonds. Other hydrogenation reactions may also or alternatively occur in components of the hydraulic liquid. As a result of these reactions, the hydrocarbon undergoes changes in physical properties. Example changes in physical properties that may be measured within the hydraulic liquid conduit 232 include viscosity, conductivity and dielectric constant. The sensor 330 may therefore be configured to measure one or more of these properties.

A variation in dielectric properties of the hydraulic liquid within the hydraulic liquid conduit 232 may be measured by measuring the capacitance between a pair of electrodes positioned within the fluid. A similar arrangement may also be used to measure conductivity of the hydraulic liquid. It is known that certain electrical conduction mechanisms in unsaturated hydrocarbons are not available in saturated hydrocarbons. A decrease in measured conductivity would therefore be expected in line with a degree of hydrogenation. An inline conductivity meter may be capable of providing a measure of electrical conductivity of the hydraulic liquid. Example conductivity meters are available for example from Jumo Instrument Co. Ltd.

A measure of viscosity of the hydraulic liquid may also be linked to a degree of hydrogenation of the components of the fluid. The sensor 330 may therefore be an inline process viscometer. The sensor 330 may also be arranged to measure a temperature of the fluid at the measurement point, since the viscosity of the fluid will also be dependent on the temperature of the fluid. A comparison between the measured viscosity of the hydraulic liquid and a previously determined measure of viscosity at the same temperature may be made. Example inline process viscometers, which may also incorporate a temperature sensor, are available such as the SRV viscometer from Rheonics.

Also shown in Figure 3 is a controller 332 connected to receive an output from the sensor 330. The controller 332 is configured to determine the physical property from the sensor output and compare this to a threshold value of the physical property. If the threshold is breached, for example if the measured viscosity is greater than a defined viscosity threshold or the conductivity is below a defined conductivity threshold, the controller 332 may provide an output signal 333 indicating the presence of a hydrogen leak into the hydraulic liquid. The output signal 333 may for example trigger an alarm so that the leak can be acted on.

An advantage of the method and system described herein is that hydrogen leaks from the hydrogen fuel conduit 206 to the hydraulic liquid conduit 232 can be detected before any leak becomes a serious issue. A further advantage is that a hydrogen leak can effectively be managed by being absorbed by the hydraulic liquid rather than resulting in a two-phase hydraulic fluid, which may cause inefficient operation of the hydraulic system. Since small hydrogen leaks are otherwise challenging to detect, the method and system described herein may enable certification of a hydrogen fuelled engine without the need for complex networks of gas sensors.

Although the above-described examples are illustrated in the context of the hydrogen and hydraulic liquid conduits 206, 232 passing through a heat exchanger 231, the same principle of determining a hydrogen leak by measuring a degree of hydrogenation may also be applied to other contexts. For example, a double-walled pipe may contain first and second fluid flow paths for hydrogen and hydraulic liquid. A hydrogen leak from one fluid flow path to the other may be detected by a change in physical property of the hydraulic liquid.

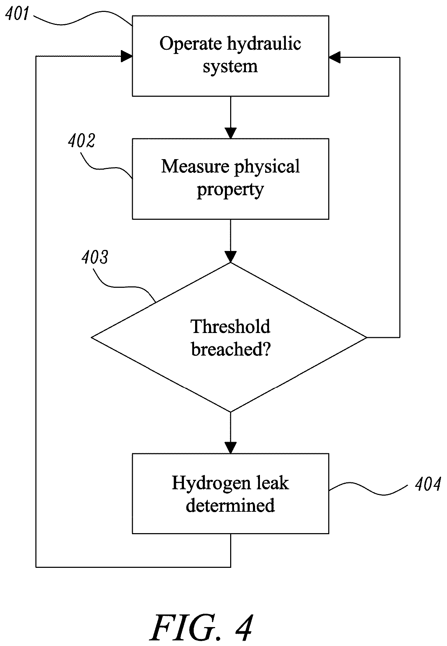

Figure 4 is a flow diagram illustrating an example method of operating a hydraulic system of a hydrogen-fuelled engine. In a first step 401, the hydraulic system is operated, for example by providing flows of hydrogen and hydraulic liquid through respective conduits. In step 402, a physical property of the hydraulic liquid within the hydraulic liquid conduit is measured. In step 403, this measure is compared with a threshold. If the threshold is breached, a hydrogen leak is determined at step 404. This may for example result in an alarm being provided. Otherwise, the hydraulic system continues operation. The hydraulic system may continue operation once a hydrogen leak has been determined.

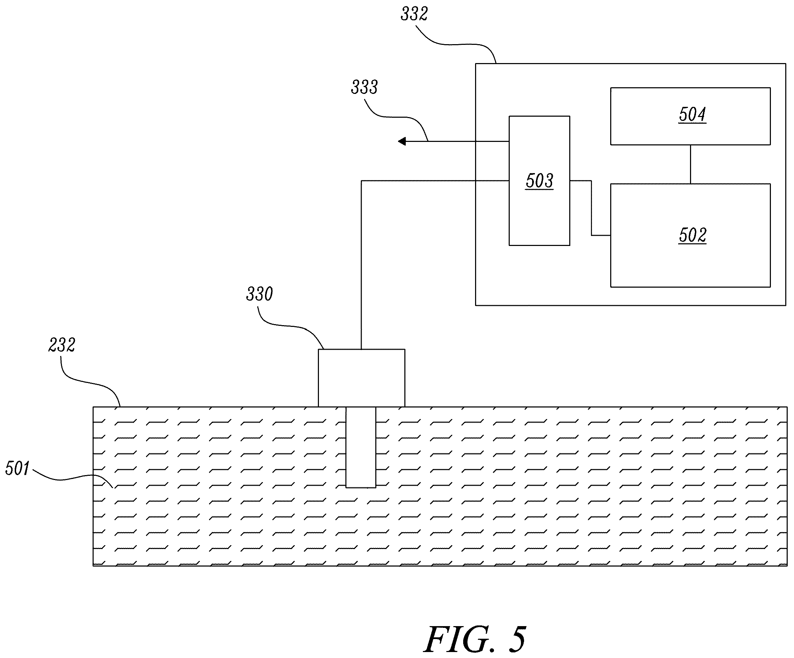

Figure 5 is a schematic diagram illustrating an example sensor 330 mounted to a hydraulic liquid conduit 232 within which a hydraulic liquid 501 is flowing. The sensor 330 is connected to a controller 332 configured to receive a sensor reading and determine a physical property of the hydraulic liquid 501 as described above. The controller 332 comprises a processor 502 connected to receive the sensor reading via an input/output interface 503 and is connected to a memory 504 for storing data and instructions for the processor 502. As described above, the controller 332 provides an output signal 333 in the event the presence of a hydrogen leak into the hydraulic liquid is detected based on a change in the sensor reading. The controller 332 may also be configured to operate part or all of the hydraulic system or may be configured specifically for detecting changes in the physical property of the hydraulic liquid 501.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein.

## Claims

1. A method of operating a hydraulic system of a hydrogen-fuelled engine, comprising:
flowing a hydraulic liquid through a first flow path within a hydraulic liquid conduit (232), the hydraulic liquid comprising an unsaturated hydrocarbon;
flowing the hydrogen fuel through a second flow path within a hydrogen fuel conduit (206) in contact with the hydraulic liquid conduit (232) towards the hydrogen-fuelled engine;
measuring a physical property relating to a degree of hydrogenation of the hydraulic liquid; and
determining a hydrogen leak from the first flow path to the second flow path from a change in the measured physical property.

2. The method of claim 1, wherein the physical property is viscosity and the step of determining the hydrogen leak may comprise comparing the viscosity of the hydraulic liquid to a threshold viscosity, and the method may comprise determining a hydrogen leak if the viscosity of the hydraulic liquid is above the threshold viscosity.

3. The method of claim 1, wherein the physical property is electrical conductivity, and the step of determining the hydrogen leak may comprise comparing the electrical conductivity of the hydraulic liquid to a threshold conductivity, and the method may comprise determining a hydrogen leak if the electrical conductivity of the hydraulic liquid is below the threshold conductivity.

4. The method of claim 1, wherein the physical property is a dielectric constant of the hydraulic liquid, and the hydraulic liquid conduit (232) and the hydrogen fuel conduit (206) may pass through a heat exchanger (232) configured to transfer heat from the hydraulic liquid to the hydrogen fuel.

5. The method of any preceding claim, wherein the unsaturated hydrocarbon is an alkene or alkylbenzene having 10 or more carbon atoms.

6. The method of any preceding claim, wherein the engine is a gas turbine engine (201).

7. A hydraulic system (300) for a hydrogen fuelled engine (201), the hydraulic system comprising:
a hydraulic liquid conduit (232) forming a first flow path for a hydraulic liquid;
a hydrogen fuel conduit (206 forming a second flow path for a hydrogen fuel, the hydrogen fuel conduit (206) in contact with the hydraulic liquid conduit (232), the hydraulic liquid conduit (232) comprising a sensor (330) configured to measure a physical property relating to a degree of hydrogenation of the hydraulic liquid; and
a controller (332) connected to the sensor (330) and configured to determine a hydrogen leak from the first flow path to the second flow path from a change in the measured physical property.

8. The hydraulic system (300) of claim 7, wherein the physical property is viscosity, and the controller (332) may be configured to determine the hydrogen leak by comparing the viscosity of the hydraulic liquid to a threshold viscosity, and the controller (332) may be configured to determine a hydrogen leak if the viscosity of the hydraulic liquid is above the threshold viscosity.

9. The hydraulic system (300) of claim 7, wherein the physical property is electrical conductivity, and wherein the controller (332) may be configured to determine the hydrogen leak by comparing the electrical conductivity of the hydraulic liquid to a threshold conductivity, and the controller (332) may be configured to determine a hydrogen leak if the electrical conductivity of the hydraulic liquid is below the threshold conductivity.

10. The hydraulic system (300) of claim 7, wherein the physical property is a dielectric constant of the hydraulic liquid, and the hydraulic system may comprise a heat exchanger (231) configured to transfer heat from the hydraulic liquid to the hydrogen fuel, wherein the hydraulic liquid conduit (232) and the hydrogen fuel conduit (206) pass through the heat exchanger (232).

11. The hydraulic system (300) of any of claims 7 to 10, wherein the engine is a gas turbine engine (201).

12. The hydraulic system (300) of claim 10, wherein the hydraulic liquid conduit forms a closed loop for recirculation of the hydraulic liquid through the hydraulic system (300).

13. The hydraulic system (300) of claim 12, comprising a hydraulic pump (302) upstream from the heat exchanger (231).
